Europäisches Patentamt

European Patent Office

Office européen des brevets

(11) Publication number: **0 252 338**
A1

## (12) EUROPEAN PATENT APPLICATION

(21) Application number: **87108597.3**

(22) Date of filing: **15.06.87**

(51) Int. Cl.³: **B 65 G 53/54**
**F 16 L 11/12**

(30) Priority: **23.06.86 IT 2235386 U**

(43) Date of publication of application:
**13.01.88 Bulletin 88/2**

(84) Designated Contracting States:
**CH DE ES FR GR LI**

(71) Applicant: **INDUSTRIE PLASTICHE LOMBARDE S.r.l.**
**Via Giovanni XXIII**
**I-21020 Cazzago Brabbia Varese(IT)**

(72) Inventor: **Ardo, Alessandro**
**Via Zara, 9**
**I-21100 Varese(IT)**

(74) Representative: **Giambrocono, Alfonso, Dr. Ing. et al,**
**Ing. A. Giambrocono & C. S.r.l. Via Rosolino Pilo 19/B**
**I-20129 Milano(IT)**

(54) Spiral tube discharge of electrostatic charges to earth.

(57) A spiral tube (1) comprising a spiral reinforcement element (2) cooperating with a sheath (3) constituting the actual conduit, with at least one electrical conductor (4) wound helically to the side of the spiral reinforcement element (2), said conductor (4) being embedded in said sheath (3) or adhering to it.

Fig. 1

1

# SPIRAL TUBE WITH DISCHARGE OF ELECTROSTATIC CHARGES TO EARTH

This invention relates to a spiral tube having particularly useful characteristics by virtue of the combination and conformation of its constituent parts.

Spiral tubes are known to be used for conveying pulverulent, granular and like material which because of its high speed of movement and the friction between it and the tube generates electrostatic charges which are a cause of well known drawbacks.

Various methods are currently used for discharging these electrostatic charges to earth, but these conventional methods are complicated and have certain applicational drawbacks.

An object of the present invention is to provide a spiral tube able to effectively discharge electrostatic charges to earth, and which is simple to produce.

This and further objects of the invention will be more apparent to experts of the art from the description given hereinafter.

The spiral tube according to the invention is of the type comprising a spiral reinforcement element cooperating with a sheath constituting the actual conduit, and is essentially characterised by comprising at least one electrical conductor wound helically to the side of the spiral reinforcement element.

The invention is illustrated by way of non-limiting example in the figures of the single accompanying drawing, in which:
Figure 1 is a perspective view of a portion of a spiral tube
according to the invention; and
Figure 2 is a section on the line II-II of Figure 1.

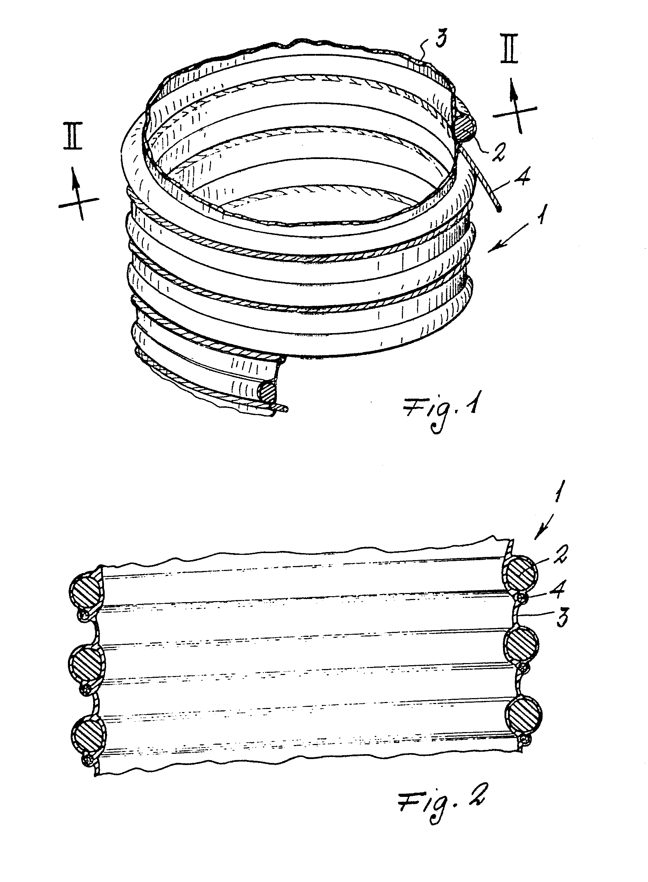

In said figures, the tube, indicated overall by 1, consists
conventionally of a spiral reinforcement element 2,
advantageously of PVC, contained within a sheath 3, for example
of polyurethane, which constitutes the actual conduit.

According to the invention, during the formation of the tube 1 a
conductor wire 4 is positioned to the side of the spiral
reinforcement element 2, and at least one end of said wire 4 can
be connected in any manner to earth.

The wire 4 can be a bare braided or single-strand wire or a PVC-
covered wire.  In the first case, the bare wire is embedded in
the sheath 3 while this is still in its plastic state during tube
formation, and in the second case it adheres to said sheath by
the effect of the initial plasticity of this latter.

The wire 4 can be unwound from a reel and wound about the tube 1
in the aforesaid manner during tube formation.

Claims:

1.      A spiral tube of the type comprising a spiral
reinforcement element (2) cooperating with a sheath (3)
constituting the actual conduit, characterised by comprising at
least one electrical conductor (4) wound helically to the side of
the spiral reinforcement element (2).

2.      A spiral tube as claimed in claim 1, characterised in
that said conductor is a bare braided or single-strand wire (4),
said conductor wire (4) being embedded in said sheath (3).

3.      A spiral tube as claimed in claim 1, characterised in
that said conductor wire (4) is a wire covered with plastics
material, said covered wire adhering to said sheath (3).

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | DE-A-2 632 963 (AZO-MASCHINENFABRIK) * claim 1; figure 2 * | 1 | B 65 G 53/54 F 16 L 11/12 |
| Y | DE-U-8 133 665 (ZEISSIG) * claims 1, 2 * | 1 | |
| Y | DE-U-6 926 613 (VORWERK & CO.) * claim 1; figure 2 * | 1 | |
| A | US-A-2 073 335 (CONNELL) * page 2, left-hand column, lines 67-71; figures 1-8 * | 1 | |
| A | FR-A-1 243 636 (THE DAYTON RUBBER CO.) * page 2, right-hand column, lines 41-58; figure 6 * | 1,3 | TECHNICAL FIELDS SEARCHED (Int Cl 4) |
| A | DE-A-2 800 798 (SUPERFLEXIT) * page 6, lines 1-12 * | 2 | B 65 G 53/00 F 16 L 11/00 H 05 F 3/00 |
| A | DE-A-1 864 284 (JENAER GLASWERK SCHOTT & GEN.) * page 2, lines 3-10 * | 3 | |

The present search report has been drawn up for all claims

| Place of search | Date of completion of the search | Examiner |
|---|---|---|
| BERLIN | 18-09-1987 | SIMON J J P |